# EUROPEAN PATENT APPLICATION

(11) **EP 3 361 435 A1**
(43) Date of publication of application: **15.08.2018**
(21) Application number: 17305162.4
(22) Date of filing: 14.02.2017
(51) Int. Cl.: G06Q 20/24, G06Q 20/38, G06Q 20/06, H04L 29/06

(54) **BLOCKCHAIN-BASED DISTRIBUTED CREDIT METHOD**

(71) Applicant: Nokia Technologies Oy, 02610 Espoo (FI)
(72) Inventor: WAISBARD, Erez, 44643 Kfar-Saba (IL); SIGNORINI, Mattéo, 91620 Nozay (FR); DI PIETRO, Roberto, 91620 Nozay (FR)
(74) Representative: Loyer & Abello

(57) **Abstract**

A network of connected devices share a ledger of payment transactions between them under the form of a standard payment blockchain. A specific obligation blockchain is added to the network, also shared by the connected devices, and a link is made between the standard payment blockchain and the specific obligation blockchain, to reflect payments made in relation to obligations. A distributed credit method is built on top of this infrastructure.

## Description

### Field of the invention

The invention relates to the technical field of adapting the blockchain technology to the requirements of a distributed credit method.

### Background

Credit systems exist that bring together providers of service and consumers of the service, such that the history of consumers paying back their debt for the consumed service is recorded and made avalaible to service providers. Service providers use this information to associate a risk profile with consumers, which in turn is used before issuing future offers for services. As an example, this is the case with the service of lending money : financial institutions associate a « credit history » to a consumer and use that information to tailor a future offer (if any) made to that consumer, for example through the amount lent, and/or the lending rate.

Different providers of the same service (not necessarily lending money) typically also share the information about consumers and potential consumers, so that the behavior of a consumer paying back its debt early, on time, or late, to one provider, is known to other providers, and the risk profile of that consumer is on a record shared by the different providers.

Typically also, the technical infrastructure put in place by or for service providers for this information sharing revolves around a central trusted entity that collects from, and dispatches to service providers, information about consumers of the service. As an example, this is the case with the credit card system in most geographies.

This type of infrastructure however faces issues, including that the central trusted entity creates a single point of failure and of vulnerability of the whole system.

Another system, Bitcoin, based on blockchain technology, has been more recently introduced which is not based on a central trusted entity. This is a distributed cash like system in which all transactions are publicly recorded so that users cannot double-spend their money. This public verifiability comes at a high cost including having to wait for each transaction to be verified by all peers in a network in order to provide high level of assurance of no double-spending occuring. Since Bitcoin emerged, other crypto currencies appeared (e.g. LiteCoins, RippleCoins, etc.). Yet all of them are debit-based, and payment has to be accepted and verified before receiving any service/good. In the Bitcoin system for example, the process of transferring money can take several minutes. Other limitations in debit-based systems include :
- cash payments do not allow complicated and/or innovative financial arrangements that are commonly devised and used in the real world ;
- there is no granularity in the payment acceptance process : transactions involving a few cents and thousands of euros alike all require the same procedure and the same waiting time to be validated.

### Summary

The invention provides for a distributed credit method based on blockchain technology. More particularly, a specific credit obligation blockchain is created and linked to a standard payment blockchain.

Even more particularly, the invention provides for a distributed credit method within a network of connected devices that share a ledger of payment transactions between them under the form of a standard payment blockchain composed of blocks, each block being linked to a chronologically previous block and comprising a set of payment transactions, and each said payment transation comprises at least an input and an output, said output being linked to an input of a payment transaction included in a chronologically subsequent block, wherein said connected devices also share a ledger of obligation transactions between them under the form of a specific obligation blockchain composed of blocks, each block being linked to a chronologically previous block and comprising a set of obligation transactions that are appended in the block in a log manner, and
wherein said method comprises the steps of :
- writing an obligation transaction into said specific obligation blockchain when credit is granted ;
- writing a payment transaction into said standard payment blockchain when payment is made toward settling at least part of said credit; and
- establishing a link between said written payment transation and said written obligation transaction.

### Brief description of the drawings

These and other aspects of the invention will be apparent from and elucidated with reference to the embodiments described hereinafter, by way of example, with reference to the drawings.
Figure 1 is a representation of a standard payment blockchain (prior art).
Figure 2 is a representation of a specific obligation blockchain according to the invention.
Figure 3 is a representation of an obligation transaction according to the invention.
Figure 4 is a detailed representation of the settlement of an obligation transaction.
Figure 5 is a representation of links between a specific obligation blockchain and a standard payment blockchain.
Figure 6 is a representation of devices implementing a specific obligation blockchain and a standard payment blockchain.

### Detailed description of the embodiments

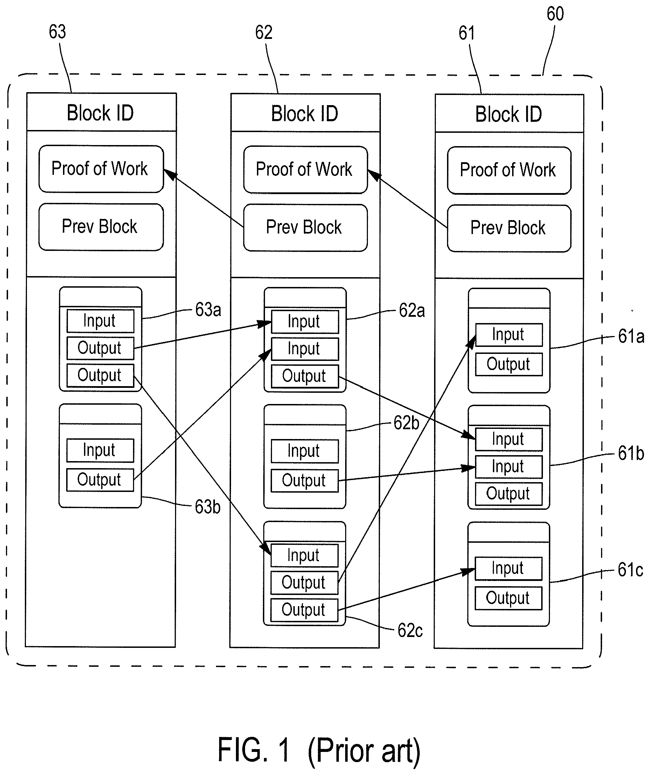

Figure 1 is a representation of a standard payment blockchain (prior art), such as Bitcoin. Standard payment blockchain 60 is composed of an unlimited number of blocks, of which three are represented as 61, 62, and 63. Each block comprises at least one payment transaction, or which two or three are represented as an example in each block as 6Xa, 6Xb, 62c and 61c. Each payment transaction comprises a number of Inputs (ie: money received) and Outputs (ie: money spent).
Transactions 6Xx are linked to each other as a valid output (money spent) must refer to a previous input (money received). This intertransaction relationship allows public verification that the money has been transferred from the payer to the payee, and a debt has been honored. In turn, this dependency on transactions to be linked results in that the only way to limit the risk of double-spending is to let time pass. The slower the standard payment blockchain is, the more secure it is.

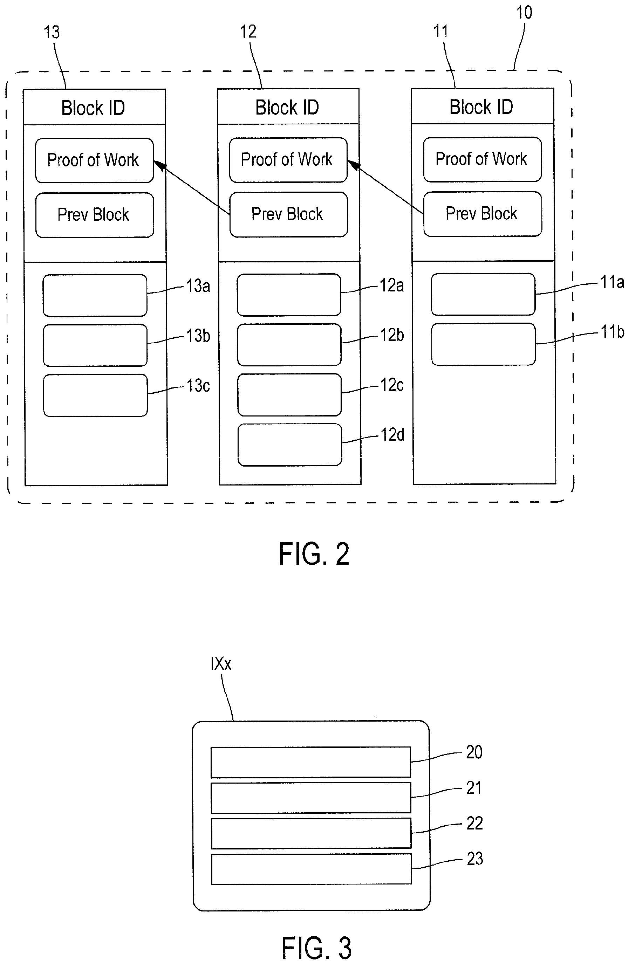

Figure 2 is a representation of a specific obligation blockchain according to the invention. Specific obligation blockchain 10 is composed of an unlimited number of blocks, of which three are represented as 11, 12, and 13. Each block comprises at least one obligation transaction, or which two, three or four are represented in each block as 1 Xa, 1 Xb, 13c and 12c, and 12d.
As in standard payment blockchain 60, specific obligation blockchain 10 contains blocks 1X which are linked to each other to allow to go back in time up to the first block ever created, the « genesis block ».
Unlike in the standard payment blockchain 60 however, obligation transactions 1Xx are not linked with each other and no dependency is defined among them. Specific obligation blockchain 10 is used as an append only log. The aim is to have a tamper proof and eventually agreed upon set of obligations which are shared among all the peers in the network.
Specific obligation blockchain 10 is added and linked to standard payment blockchain 60 as is described hereafter. In this way is devised a new resulting blockchain which is not debit-based but rather credit-based.

Figure 3 is a representation of an obligation transaction according to the invention. An obligation transaction 1Xx comprises several pieces of information relative to a credit:
- a unique obligation transaction ID 20, which allows to uniquely identify obligation transaction 1Xx within specific obligation chain 10, and to uniquely settle it from within a standard payment blockchain;
- an obligation emitter signature 21, which allows to identify the emitter of an obligation thus avoiding network peers from creating fake obligations ;
- an obligation receiver signature 22, which allows to indicate acceptance and endorsement of the obligation by a particular receiver; and
- a time stamp 23, which allows to indicate the timing of the obligation acceptance by the obligation receiver.

Unlike Bitcoin transactions which can either be spent or unspent, obligations according to the invention can fall into one of the following categories:
- « Unspent »: an obligation is generated by a network peer A which has not yet used it in the peer to peer network
- « Spent »: an obligation which was not spent yet has been sent by its owner to another network peer B

- « Accepted »: once network peer B receives the spent obligation, it decides whether to accept it or reject it, thus making it accepted. Once an obligation is accepted, it is written into the specific obligation blockchain 10 and sent in broadcast to the whole network
- « Settled »: once an obligation has been settled (ie : paid by network peer A) it is recorded as settled by referencing to it from within the standard payment blockchain 60

Contrary to payment transactions, obligation transactions are not validated by the whole network : as an obligation represents an "obligation to pay" it is only the receiver who can take the risk to accept it or not, hence receive, validate and share it with the rest of the network. As such, obligation transactions are not sent in broadcast but are rather exchanged directly between the sender and the receiver. Then, the receiver creates blocks with all newly received obligation transactions and broadcasts them to the network.

Once a new obligation block 1X has been added to the specific obligation blockchain 10, each obligation transaction 1Xx in the block is considered « Accepted » and waiting to become « Settled ». Settling an obligation means that a payment, such as a payment transaction, is linked to the obligation transaction thus labelling it as honored. This settlement and linking is now described in further details.

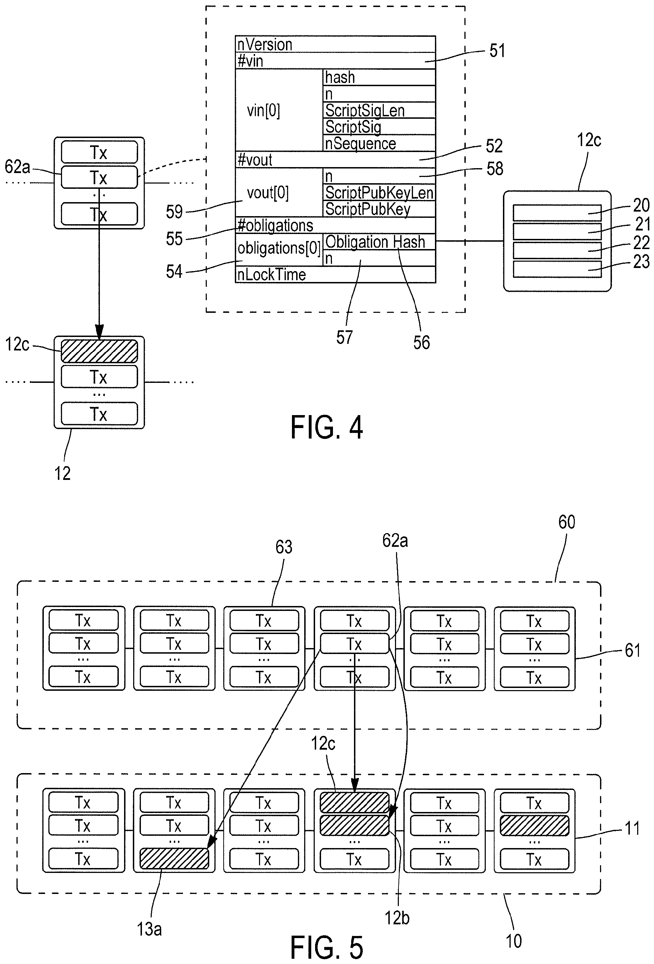

Figure 4 is a detailed representation of the settlement of an obligation transaction. For the sake of explanation, what is illustrated in detail are the elements embedded into payment transaction 62a in order to settle an obligation transaction 12c that has been spent and accepted within specific obligation blockchain 10.
As an example, only one input value 51, one output value 52 are represented in payment transaction 62a. It is assumed, without limitation, that this particular settlement is for one obligation only. Additional elements include:
- element 54 is an obligation array containing one entry for each obligation settled with this transaction;
- element 55 is the number of obligations settled with this transaction. It can be also seen as the size of the obligation[] array;

- element 56 is the obligation Hash, ie: a value used to uniquely refer to obligation transaction 12c in the specific obligation blockchain 10; it is computed as the SHA256 hash of obligation transaction12c; obligation transaction ID 20 of obligation transaction 12c is thus introduced in payment transaction 62a so as to uniquely identify and point to obligation transaction 12c;
- element 57 is the number of coins that have been used in this transaction to redeem this obligation. It has to match the obligation's value.

The amount of coins to be transferred is expressed by field 58 within field 59. Indeed, field 59 is an array of output transactions in standard payment chain 60 as shown in Figure1. The array may have as many values as needed, the only requirement is that the sum of all these values be equal or less than the linked input transation in standard payment chain 60 as shown in Figure1.

Payment transaction 62a is validated in a manner known to the person skilled in the art of blockchains by the whole network, and written within standard payment blockchain 60 by a randomly selected peer. Once such payment transaction 62a has been recorded and broadcasted to the network, the obligation transaction 12c linked to it through the obligation transaction ID 20, is labelled as « settled ». The obligation ID 20 is inserted in the Output field of the payment transaction (ie: money spent); by introducing the obligation ID 20 within the payment transaction that is trying to settle it, a link is created between standard payment blockchain 60 and specific obligation blockchain 10.

Such a link allows all network peers to see which obligations were honored and which obligations have not (yet). In such a system the credibility of consumers is determined according to the links between their payments and obligations. A consumer that always honors its obligation is more likely to be credited by new service providers while the ones that do not honor their obligations are expected not to be serviced with credit. The decision of whether or not to accept an obligation from a consumer is entirely in the hands of the service provider and can vary between different service providers and different values of transactions.

Figure 5 is a representation of links between a specific obligation blockchain and a standard payment blockchain. Each payment transation 6Xx within standard payment blockchain 60 may contain links to one or more obligation transactions 1Xx. Three such links are represented on Figure 5 in relation to payment transaction 62a, respectively to 12c, 12b and 13a, as examples. Once a payment transaction 6Xx has been validated by the network of peers, all the corresponding linked obligation transactions 1Xx are labelled as « settled ».

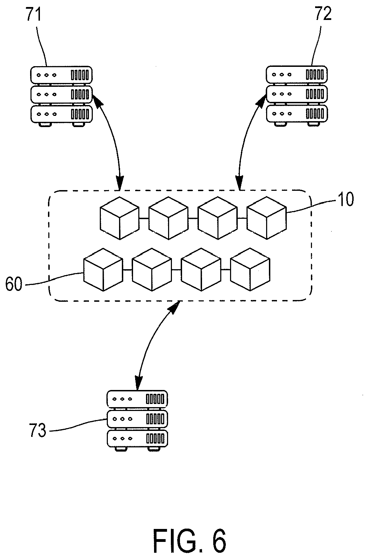

Figure 6 is a representation of devices implementing a specific obligation blockchain and a standard payment blockchain. As an example a system of three devices are represented 71, 72 and 73: they can be any type of computing apparatus that is able to read/write standard payment blockchain 60 and specific obligation blockchain 10. Each connected device 71, 72, and 73 maintains all the ledgers (ie: the blockchains) which are shared between them. Connected devices may for example be backend servers of respectively providers of services and consumers of such services.
The invention allows full flexibility in service providers choosing and implementing trust models with consumers, and to devise innovative financial arrangements and a richer set of business models. For example, a business model in which a consumer will pay for each use of a service at or under 3 uses per month, and will pay a flat fee to the service provider if above 3 uses. This is not known in advance and is settled at the end of the month according to the actual number of times the service was used.
Moreover according to the invention, obligations are only logged and not interlinked, which results in not imposing delays as the Bitcoin system and other debit-based systems do.

Devices 71, 72 and 73 and any other computing apparatus reading and writing standard payment blockchain 60 and specific obligtation blockchain 10, could be e.g. hardware means like e.g. an ASIC, or a combination of hardware and software means, e.g. an ASIC and an FPGA, or at least one microprocessor and at least one memory with software modules located therein.

The invention is not limited to the described embodiments. The appended claims are to be construed as embodying all modifications and alternative constructions that may occur to one skilled in the art, and which fairly fall within the basic teaching as set forth herein.

The use of the verb "to comprise", "to include" or "to contain" and their conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A distributed credit method within a network of connected devices (71, 72, 73) that share a ledger of payment transactions (6Xx) between them under the form of a standard payment blockchain (60) composed of blocks (6X), each block being linked to a chronologically previous block and comprising a set of payment transactions (6Xx), and each said payment transation (62a) comprises at least an input and an output, said output being linked to an input of a payment transaction (61 b) included in a chronologically subsequent block,
wherein said connected devices (71, 72, 73) also share a ledger of obligation transactions (1Xx) between them under the form of a specific obligation blockchain (10) composed of blocks (1X), each block being linked to a chronologically previous block and comprising a set of obligation transactions (1Xx) that are appended in the block in a log manner, and
wherein said method comprises the steps of :
A- writing an obligation transaction (12c) into said specific obligation blockchain (10) when credit is granted ;
B- writing a payment transaction (62a) into said standard payment blockchain (60) when payment is made toward settling at least part of said credit; and
C- establishing a link between said written payment transation (62a) and said written obligation transaction (12c).

2. The method of claim 1 wherein step A comprises the grantee of said credit validating said written obligation transaction (12c), and step B comprises the whole network validating said written payment transaction (62a).

3. The method of claim 1 or 2 wherein said written obligation transaction (12c) comprises :
- a unique obligation transaction ID (20) ;
- an obligation emitter signature (21) ;
- an obligation receiver signature (22) ; and
- a time stamp (23).

4. The method of claim 3 wherein said written payment transaction (62a) comprises in said output said unique obligation transaction ID (20).

5. The method of any of the claims 1 to 4 wherein said written payment transaction (62a) comprises :
- an obligation array (54) containing one entry for each obligation transaction settled ;
- a number of obligation transactions (55) settled ;
- a hash value (56) for said written obligation transaction (12c) ; and
- a number of coins (57) used through said written payment transaction (62a) to redeem said written obligation transaction (12c).
